# EUROPEAN PATENT SPECIFICATION

(11) **EP 2 301 193 B1**
(45) Date of publication and mention of the grant of the patent: **11.09.2013**
(21) Application number: 09773793.6
(22) Date of filing: 03.07.2009
(51) Int. Cl.: H04L 12/18

(54) **METHOD FOR FORMING AN ELECTRONIC GROUP**
VERFAHREN ZUR HERSTELLUNG EINER ELEKTRONISCHEN BAUGRUPPE
PROCÉDÉ DE FORMATION D UN GROUPE ÉLECTRONIQUE

(30) Priority: 04.07.2008 EP 08159761
(43) Date of publication of application: 30.03.2011
(73) Proprietor: Nederlandse Organisatie voor Toegepast -Natuurwetenschappelijk Onderzoek TNO, 2628 VK Delft (NL)
(72) Inventor: KLOS, Victor Bastiaan, NL-2498 BV Den Haag (NL); VAN DEVENTER, Mattijs Oskar, NL-2264 DL Leidschendam (NL)
(74) Representative: Jansen, Cornelis Marinus
(86) International application number: PCT/NL2009/050399
(87) International publication number: WO 2010/002260

(56) References cited:
- EP-A- 1 676 462
- EP-A- 1 901 528
- EP-A- 1 937 025
- US-A1- 2003 084 282

## Description

### FIELD OF THE INVENTION

The present invention relates to a method for managing an electronic group comprising several, i.e. two or more, group members. In particular, the invention relates to a method of managing an electronic group comprising two or more group members, wherein all members are conceived to use mobile terminals for setting such a group, wherein such terminals are capable of mutual exchange, for example, via short-range communication links, data relating to a relevant terminal, user and/or group codes.

### BACKGROUND OF THE INVENTION

Electronic communities may be defined as groups of people (or in general "entities") that use "electronic" means, i.e. nowadays Information and Communications Technology (ICT) means, to collaborate within a group. Typical applications of electronic communities are
- Shared work space(s) on a file server
- Shared e-mail account(s)
- Shared electronic agenda(s)
- Shared address book(s)
- Shared document(s)
- Shared application(s)
- Shared intranet(s)

The term "electronic" is used to indicate that the group, e.g. to be established for a longer period of time, is independent of the location of the participants. Here are some examples of such communities, which also may be called "electronic groups", "collaboration groups" etc. (however, the concept of "electronic group" will be used as a rule hereinafter):
- A department of a company
- A project within a company
- A collaboration between people of different companies
- A course with students and teachers
- A homework group
- A virtual reality gaming group

It is a disadvantage of present group managing methods that the formation of a new electronic group is rather cumbersome. When a group of people gathers in a meeting, for example, for establishing a new project team, then the real group is already physically in place. However, many steps are needed to turn the ad-hoc real group into an electronic one. Such steps may include:
- The group leader needs to create (register) the electronic group.
- The group leader needs to select and authorize each of the group members.
- The group leader needs to inform each of the members of the created group.
- Each of the members may have to perform further administrative activities.

All of these activities often require the invocation of experts of the IT helpdesk.

Also joining (or registering to) an existing electronic group is rather cumbersome. When a potential new member meets the group leader in person, the group leader can decide to accept the new member. However, also then many steps are needed, such as:
- The new member may send an electronic membership application to the group leader.
- The group leader has to authorize the new member.
- The new member has to be informed about the accepted authorization.

Again, these activities often require the invocation of the IT helpdesk.

### SUMMARY OF THE INVENTION

It is an object of the invention to provide a method which enables registering a plurality of group members to an electronic group during a physical meeting, e.g. to enable (electronic) follow up of (inter)actions of the group members. It is a further object of the invention to provide a method enabling a more efficient creation and management of an electronic group/group.

According to the present invention a method is provided according to claim 1.

It will be appreciated that a group may be constituted by collecting, e.g. via smart phones and e.g. Bluetooth, Infrared (IR) etc., identifiers of the members when they are (still) in each other's vicinity, e.g. during a ("live") meeting. One group member may act as an (ad hoc or as a more or less permanent) group representative, who provides a group identifier (A) and the required member identifiers (M₁, M₂, M₃, etc.) and who transmits them after the "live" meeting, e.g. via a (mobile) Internet path, from his/her smart phone to a group facilitating server, to be registered as group token (T), thus enabling an electronic group, the members of which can communicate and/or exchange information via their smart phones (e.g. via the Internet) and/or other terminals, like laptops, desktops, Personal Digital Assistants (PDA) etc. It is presumed that the same identifiers should be used for access to the server as the codes collected in the group constitution phase, which codes of course could be changed afterwards in any conventional way.

New members can be added to the group either via any conventional process (e.g. via a wired or mobile network e.g. the Internet) or in a way which is similar to the new group forming process according to the invention as outlined above.

An embodiment of a method for establishing a data exchange session between devices in a mobile ad hoc network is known from EP 1 901 528. In the known method a host may initiate a communicative environment, i.e. a chat session, wherein other potential group members, dwelling in a neighborhood, should request to join the session when made aware of such possibility.

It will be appreciated that in the known method exchange of data is only possible while users stay in direct vicinity to each other. In addition, no well-specified group is formed, i.e. the communicative environment is initially empty and is constantly being filled by new members, while active members may exit the environment. Accordingly, the group is not defined and is unstable.

In the invention, however, a stable and well-defined group is formed automatically by the group representative due to using a group identifier (A) and member identifiers (M1, ..., Mn) for defining group tokens T1, ... Tn. The group tokens are stored in a group facilitating server for forming and electronic group irrespective of a further location of the group members, provided they are still within the communication range.

A further embodiment of a method for forming a data exchange environment is known from EP 1 937 025. In the known method the group constitution is managed on a peer-to-peer basis and not on a host-to-server basis. This feature is envisaged for preventing the group from collapsing when the host leaves the session. The group is created and is maintained for a number of users located within a general range restriction of Bluetooth or Wi-Fi. Also in this method the group constitution is neither constant nor persistent. In particular, a session initiator is conceived to continuously generate and transmit invitations for enabling further members to join the group. This embodiment has a disadvantage of increased complexity and elevated power consumption.

In an alternative embodiment of the method known from EP 1 937 025 no master is assigned to the group so that a mobile device of each invitee when joining the group is automatically switched into transmitting mode for inviting further group members. This embodiment has a disadvantage that a non-controlled avalanche-like group expansion may be triggered, which is undesirable, for example, for managing professional meetings.

It is noted that EP 1 676 462 discloses a method and apparatus serving hundreds or thousands of delegates of conferences and other live events with up-to-date information, wherein so-called broadcast files are transmitted over a distinct wireless channel to wireless handheld devices of the delegates.

The method according to the invention has the following advantages over using conventional network-based communications:
- Setting up the communication is simpler
   ○ Network-based communication would require the typing in of phone numbers, email addresses or other identifiers.
   ○ Short range communication, on the contrary, is simply set up by selecting the communication partner from a short list of other in the immediate vicinity.
- The locality (due to the short-range path used to setup the group) offers a good basic level of security
   ○ Only people in the immediate vicinity can set up the communication.
   ○ This matches perfectly with the physical group.
- No (long range) network (e.g. Internet) coverage is needed
   ○ All of the essential electronic-group creation tasks can be handled locally.

The invention includes the method outlined above, wherein further advantageous embodiments thereof are described in the appended claims. The invention further relates to a computer program product and a system for carrying out the steps of the method as is set forth in the foregoing. It will be appreciated that the computer program product may comprise a suitable number of individual software packages. The invention still further relates to a mobile terminal provided with components for carrying out the steps of the method as is set forth in the foregoing. It will be appreciated that the mobile terminal may be distributed over several isolated components.

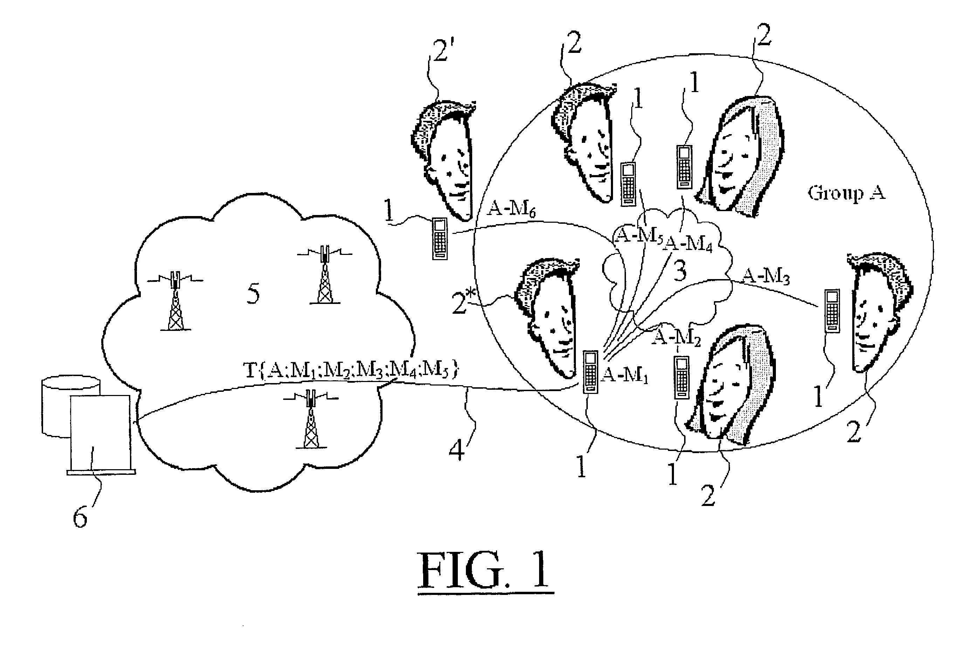

Figure 1 shows a schematic and exemplary architecture which can be used to perform the method according to the invention.

Such exemplary architecture arranged for performing the method according to the invention preferably comprises the following elements:
- Smart phones 1
   ○ All (aspirant) members 2, incl. (at least) one of them acting as group representative 2* (who also may be called group leader) have smart phones 1.
   ○ The smart phones support at least one short-range communication technology, like Bluetooth, infrared (IR), Wi-Fi etc., indicated by short-range links 3.
   ○ The smart phones (at least the one of the group representative) preferably support at least one network-based communication technology, like GPRS, UMTS, EDGE, HSDPA, Ethernet, Token Ring, or other, indicated by a network-based link 4.
   ○The smart phones are used to create or join an electronic group.
- Communication network 5
   ○ E.g. GPRS, UMTS, EDGE, HSDPA, ...
- Group (facilitating) server 6
   ○ This is any server/service arranged to facilitate the creation and management of electronic communities.

Figure 1 shows a group of persons, desiring to form an electronic group A, comprising five group members (2). All members use mobile terminals (1) which are capable to mutually exchange, via a short-range communication link (3), e.g. Bluetooth, relevant terminal, user and/or group codes. During a group constituting session, in which the members are physically in each other's vicinity, i.e. within the reach of the short-range link, at least one member of the intended group, acting as a group representative (2*) collects, e.g. using a "Bluetooth Teaming" (BTT) software program, using the short-range link (3), from all other members, their user or terminal identifiers, called member identifiers (M₂, M₃, etc.) hereinafter (M₁ is already known by the group representative). The BTT program generates a group token (T) in the terminal of the group representative (2*), which token includes a group identifier (A) and all member identifiers (M₁, M₂, M₃, etc.). At least the group identifier is transmitted, via the short-range link, to each group member. For security and/or management reasons it may be preferred to transfer the identifiers of the group representative (2*) and/or all group members (2) as well. The group token (T) may thus include the group identifier (A) and e.g. all member identifiers (M₁, M₂, M₃, etc.).

After the group constituting session all group members may go their own way, thus becoming located outside the reach of the short-range (Bluetooth) "ad hoc network" which was set up when the members were in each other's vicinity, e.g. within the same room or location, in order to exchange the identifiers for setting up the intended (e.g. collaboration) group. So, after everyone has gone his/her own way, the group representative (2*) - who is at least temporarily responsible for forming the (new) group - contacts, via any communication link (4) - e.g. a wireless or wired, short-range or long-range, public or non-public network (5) - a group facilitating server (6) and stores there the group token (T), including the group identifier (A) and all collected member identifiers (M₁, M₂, M₃, etc.).

After the group (A) has been registered in the server (the group defined by its token T, comprising a group identifier A and its member identifiers M₁, M₂, M₃, etc.), each member may use the group facilities to keep in touch with one another via any network, e.g. via a LAN, Intranet, Internet etc., e.g. for sharing work space on a file server, e-mail accounts, electronic agendas, address books, documents, application etc., all this under control of the group data, i.e. the group token, registered in the group server. Further, each group member may activate in his/her mobile device an application which "sniffs" - e.g. via Bluetooth - whether there are other group members in the neighbourhood. The mobile device may either continuously or periodically broadcast e.g. the relevant group identifier (A), which can be picked up by the mobile devices of other group members, and/or the device may "listen" - e.g. via Bluetooth - whether other mobile devices broadcast such group identifier. In that way group members will be able to be notified when another group member is in the vicinity. This mechanism may be performed for several groups (A, B, C, etc.) to which a user has been registered as a member.

When a new member 2' is permitted to join the (existing) group next steps may performed when the new group member is physically in the vicinity, i.e. within the reach of the short-range link, of any group representative, who may be - but doesn't have to be - the same person as the group representative acting in the group forming stage as outlined above. This group representative collects, again via a short-range link (3), from the new members, his/her user or terminal identifier, acting as his/her member identifier (M₅), after which the group representative transmits the relevant group identifier (A), via the short-range link, to the new member. Finally, the group representative contacts, via any communication link (4), the group facilitating server (6) and adds the collected member identifier (M₅) of the new member to the group token (T) of the relevant group, after which the new member has become a member of the group. The group token (T) will thus be extended with the member identifier (M₅) of the new group member.

It will be appreciated that while the invention is explained with reference to a preferred embodiment, various changes and further modifications may be made therein by those skilled in the art without departing from the scope of the appended claims.

## Claims

1. Method for managing an electronic group comprising two or more group members (2), all members, using, at least for setting up such a new group, mobile terminals (1) which are capable to mutually exchange, via short-range communication links (3), relevant terminal, user and/or group codes, the method comprising the steps of:
a. initiating the group by a group representative (2*) by defining a group identifier (A) and making it available to the other members of the intended group via the short-range links (3) during a group constituting session in which the members are located within the reach of a short-range link;
b. collecting by the group representative (2*) from all relevant members, including him/herself, their user or terminal identifiers, called member identifiers (M₁, M₂, M₃, etc.), via the short-range links (3);
c. constituting one or multiple group tokens (T₁, T₂, ...) by the group representative (2*) or his/her terminal, including identification of the group representative, a group identifier (A) and member identifiers;
d. contacting after the group constituting session by the group representative, via any communication link (4,5), a group facilitating server (6) and storing into it said group token or tokens (T1, T2, ...), including the group identifier (A) and all member identifiers (M₁, M₂, M₃, etc.) belonging to that group,
wherein for a new member provided with a mobile terminal capable of mutually exchange, via a short-range communication link (3), relevant terminal, user and/or group codes with any member of the existing group, acting as a group representative, for registering the new member to the group the method comprises the steps of:
a. making the group identifier A available by the existing member acting as group representative to prospect members, via a short-range link (3), during the registering session in which both existing and prospect members are within the reach of the short-range link,;
b. collecting by the group representative, from the new member(s), a user or terminal identifier, called member identifier (M5) hereinafter, via a short-range link (3);
c. constituting one or multiple group tokens (T3, T4, ...) by the group representative or his/her terminal, including identification of the group representative , the group identifier (A) and member identifiers;
d. contacting after this session by the group representative, via any communication link (4, 5), the group facilitating server (6) and adding the additional tokens (T3, T4, ...) of the relevant group,
the group member acting as group representative for adding a new member to
an existing group being the same member or being not the same member as the group member (2*) acting as group representative for the constitution of a new group,
wherein the group token(s) Tx optionally include one or more of the following information elements:
- time stamp(s), identifying the time of the generation of (elements of) the token
- authentication information to authenticate elements of the token
- encryption to encrypt the contents of the token
- expiration time information to indicate the time until which the token remains valid.

2. Method according to claim 1, in which step a is achieved by the terminal of the relevant group representative continuously or periodically broadcasting the group identifier (A), and in which step b is achieved by the (terminals of) prospect members setting up communication with the group representative as a response to that broadcast.

3. Method according to claim 1, in which step a is achieved by the terminal of the group representative continuously or periodically listening for incoming requests, (the terminals of) prospect members sending out requests, and the terminal of the group representative responding with the group identifier (A), and in which step b is achieved in a continuation of the communication set up in step a.

4. Method according to claim 1, wherein multiple group representatives of different groups can be present in the vicinity of the prospect member, and the prospect member is enabled to make a selection of the group(s) that he/she intends to join.

5. Method according to any preceding claim, wherein the group representative is given the option to accept or reject submitted prospect members.

6. Method according to any preceding claim, wherein authentication steps are included to validate the authenticity of the group identifier (A) and/or the member identifiers (M₁, M2, M3, etc.).

7. Method according to any preceding claim, wherein encryption steps are included to protect the contents of the information exchange between group representative and prospect member(s).

8. Method according to any preceding claim, wherein the group token(s) are encrypted to protect their contents from inadvertently being disclosed to or modified by a third party.

9. A computer program product comprising instruction for causing a processor to carry out the steps of the method according to any one of the preceding claims 1 -8.

10. A mobile terminal comprising components arranged for performing the method according to any preceding claim 1 - 8.

## Patentansprüche

1. Verfahren zur Verwaltung einer elektronischen Baugruppe, umfassend zwei oder mehr Gruppenmitglieder (2), wobei alle Mitglieder, zumindest zum Einrichten einer solchen neuen Gruppe, mobile Datenendgeräte (1) umfassen, die in der Lage sind, über Kurzstrecken-Kommunikationsverbindungen (3) relevante Datenendgerät-, Nutzer- und/oder Gruppencodes miteinander auszutauschen, wobei das Verfahren folgende Schritte umfasst:
a. Initiieren der Gruppe durch einen Gruppenvertreter (2*) durch Definieren eines Gruppenidentifikators (A) und dessen Bereitstellung an die anderen Mitglieder der betreffenden Gruppe über die Kurzstreckenverbindungen (3) während einer Gruppenbildungssitzung, in der sich die Mitglieder in Reichweite einer Kurzstreckenverbindung befinden;
b. Sammeln durch den Gruppenvertreter (2*) von allen relevanten Mitgliedern, einschließlich ihm/ihr, von deren Nutzer- oder Datenendgerätidentifikatoren, genannt Mitgliedsidentifikatoren (M₁, M₂, M₃, usw.), über die Kurzstreckenverbindungen (3);
c. Bilden von einem oder mehreren Gruppentoken (T₁, T₂, ...) durch den Gruppenvertreter (2*) oder sein/ihr Datenendgerät, einschließlich Identifikation des Gruppenvertreters, einem Gruppenidentifikator (A) und Mitgliedsidentifikatoren;
d. Kontaktaufnahme, nach der Gruppenbildungssitzung durch den Gruppenvertreter, über eine beliebige Kommunikationsverbindung (4, 5), mit einem Gruppenfazilitationsserver (6) und Speichern des oder der Gruppentoken (T₁, T₂,...), einschließlich des Gruppenidentifikators (A) und aller zu dieser Gruppe gehörenden Mitgliedsidentifikatoren (M₁, M₂, M₃, usw.) in diesem,
wobei für ein neues Mitglied, ausgerüstet mit einem mobilen Datenendgerät, das in der Lage ist, über eine Kurzstrecken-Kommunikationsverbindung (3) relevante Datenendgerät-, Nutzer- und/oder Gruppencodes mit einem beliebigen Mitglied der existierenden Gruppe, das als Gruppenvertreter fungiert, auszutauschen, um das neue Mitglied der Gruppe zu registrieren, wobei das Verfahren folgende Schritte umfasst:
a. Bereitstellen des Gruppenidentifikators (A) durch das existierende Mitglied, das als Gruppenvertreter fungiert, an mögliche Mitglieder über eine Kurzstreckenverbindung (3) während der Registrierungssitzung, in der existierende wie auch mögliche Mitglieder in Reichweite der Kurzstreckenverbindung (3) sind;
b. Sammeln durch den Gruppenvertreter von dem oder den neuen Mitglied(ern) eines Nutzer- oder Datenendgerätidentifikators, im Folgenden Mitgliedsidentifikator (M5) genannt, über eine Kurzstreckenverbindung (3);
c. Bilden von einem oder mehreren Gruppentoken (T₃, T₄,...) durch den Gruppenvertreter oder sein/ihr Datenendgerät, einschließlich Identifikation des Gruppenvertreters, des Gruppenidentifikators (A) und der Mitgliedsidentifikatoren;
d. Kontaktaufnahme nach dieser Sitzung durch den Gruppenvertreter über eine beliebige Kommunikationsverbindung (4, 5) mit dem Gruppenfazilitationsserver (6) und Hinzufügen der zusätzlichen Token (T₃, T₄,...) der relevanten Gruppe,
wobei das Gruppenmitglied, das als Gruppenvertreter zum Hinzufügen eines neuen Mitglieds zu einer existierenden Gruppe fungiert, dasselbe Mitglied oder nicht dasselbe Mitglied ist wie das Gruppenmitglied (2*), das als Gruppenvertreter für die Bildung einer neuen Gruppe fungiert,
wobei das oder die Gruppentoken Tx optional eines oder mehrere der folgenden Informationselemente umfasst/umfassen:
- den/die Zeitstempel, der/die die Uhrzeit der Erzeugung von (Elementen von) dem/den Token identifiziert/identifizieren
- die Authentifizierungsinformation zum Authentifizieren der Elemente des Token
- Verschlüsselung zum Verschlüsseln des Inhalts des Token
- Verfallzeitinformation, um die Zeit anzugeben, bis wann das Token gültig bleibt.

2. Verfahren nach Anspruch 1, in welchem Schritt a bewerkstelligt wird, indem das Datenendgerät des relevanten Gruppenvertreters kontinuierlich oder periodisch den Gruppenidentifikator (A) überträgt, und in dem Schritt b bewerkstelligt wird, indem die (Datenendgeräte von) möglichen Mitglieder eine Kommunikation mit dem Gruppenvertreter als Reaktion auf diese Übertragung herstellen.

3. Verfahren nach Anspruch 1, in welchem Schritt a bewerkstelligt wird, indem das Datenendgerät des Gruppenvertreters kontinuierlich oder periodisch nach ankommenden Anfragen horcht, (die Datenendgeräte von) mögliche(n) Mitglieder(n) Anfragen aussenden, und das Datenendgerät des Gruppenvertreters mit dem Gruppenidentifikator (A) antwortet, und in dem Schritt b in einer Fortsetzung der in Schritt a eingerichteten Kommunikation bewerkstelligt wird.

4. Verfahren nach Anspruch 1, wobei mehrere Gruppenvertreter von verschiedenen Gruppen in der Nähe des möglichen Mitglieds anwesend sein können und das mögliche Mitglied befähigt ist, eine Auswahl der Gruppe(n) zu treffen, der/denen er/sie sich anschließen will.

5. Verfahren nach einem der vorhergehenden Ansprüche, wobei der Gruppenvertreter die Option erhält, mögliche Mitglieder zu akzeptieren oder abzulehnen.

6. Verfahren nach einem der vorhergehenden Ansprüche, wobei Authentifizierungsschritte enthalten sind, um die Authentizität des Gruppenidentifikators (A) und/oder der Mitgliedsidentifikatoren (M₁, M₂, M₃, usw.) zu validieren.

7. Verfahren nach einem der vorhergehenden Ansprüche, wobei Verschlüsselungsschritte enthalten sind, um die Inhalte des Informationsaustauschs zwischen Gruppenvertreter und einem oder mehreren möglichen Mitglied(ern) zu schützen.

8. Verfahren nach einem der vorhergehenden Ansprüche, wobei das/die Gruppentoken verschlüsselt ist/sind, um zu verhindern, dass die Inhalte versehentlich an eine dritte Partei offenbart werden oder von dieser geändert werden.

9. Computerprogrammprodukt, umfassend eine Anweisung, um einen Prozessor zur Ausführung der Schritte des Verfahrens nach einem der vorhergehenden Ansprüche 1 - 8 zu veranlassen.

10. Mobiles Datenendgerät, umfassend Komponenten, die zur Ausführung des Verfahrens nach einem der vorhergehenden Ansprüche 1 - 8 geeignet sind.

## Revendications

1. Procédé pour gérer un groupe électronique comprenant deux ou plus de deux éléments de groupe (2), tous les éléments, utilisant, au moins pour établir un tel nouveau groupe, des terminaux mobiles (1) qui sont capables d'échanger mutuellement, ,par l'intermédiaire de liaisons de communication à courte portée (3), des codes de terminal, d'utilisateur et/ou de groupe concernés, le procédé comprenant les étapes consistant à :
- a. lancer le groupe par un représentant de groupe (2*) en définissant un identifiant de groupe (A) et en le rendant disponible pour les autres éléments du groupe prévu par l'intermédiaire des liaisons à courte portée (3) pendant une session de constitution de groupe dans laquelle les éléments sont situés dans l'étendue d'une liaison à courte portée ;
- b. recueillir par le représentant de groupe (2*) à partir de tous les éléments concernés, y compris lui-même, leurs identifiants d'utilisateur ou de terminal, des identifiants d'élément appelé (M1, M2, M3, etc), par l'intermédiaire des liaisons à courte portée (3);
- c. constituer un ou plusieurs jetons de groupe (T₁, T₂, ...) par le représentant de groupe (2*) ou son terminal, incluant l'identification du représentant de groupe, d'un identifiant de groupe (A) et d'identifiants d' élément ;
- d. établir le contact après la session de constitution de groupe par le représentant de groupe, par l'intermédiaire d'une liaison de communication quelconque (4, 5), avec un serveur de promotion de groupe (6) et mémoriser dans celui-ci le ou les jetons de groupe (T₁, T₂, ...), incluant l'identifiant de groupe (A) et tous les identifiants d'élément (M1, M2, M3,...) appartenant à ce groupe,
dans lequel pour un nouvel élément muni d'un terminal mobile capable d'échanger mutuellement, par l'intermédiaire d'une liaison de communication à courte portée (3), des codes de terminal, d'utilisateur et/ou de groupe concernés avec un élément quelconque du groupe existant, agissant comme un représentant de groupe, pour enregistrer le nouvel élément pour le groupe, le procédé comportant les étapes consistant à :
- a. rendre l'identifiant de groupe A disponible par l'élément existant agissant comme représentant de groupe pour des éléments prospects, par l'intermédiaire d'une liaison à courte portée (3), pendant la session d'enregistrement dans laquelle à la fois des éléments existants et prospect sont dans l'étendue de la liaison à courte portée ;
- b. recueillir par le représentant de groupe, à partir du ou des nouveaux éléments, un identifiant d'utilisateur ou de terminal, appelé ci-après identifiant d'élément (M5), par l'intermédiaire d'une liaison courte portée (3);
- c. constituer un ou plusieurs jetons de groupe (T₃, T₄, ...) par le représentant de groupe ou son terminal, comprenant l'identification du représentant de groupe, l'identifiant de groupe (A) et des identifiants d' élément ;
- d. établir le contact après cette session par le représentant de groupe, par l'intermédiaire d'une liaison de communication quelconque (4, 5), avec le serveur de promotion de groupe (6) et ajouter les jetons supplémentaires (T₃, T₄, ...) du groupe concerné,
l'élément de groupe agissant comme représentant de groupe pour ajouter un nouvel élément à un groupe existant étant le même élément ou n'étant pas le même élément que l'élément de groupe (2*) agissant comme représentant de groupe pour la constitution d'un nouveau groupe,
dans lequel le ou les jetons de groupe T_{X} comprennent facultativement un ou plusieurs des éléments d'information qui suivent :
- une ou des estampille(s) temporelle(s), identifiant l'instant de la création du jeton (d'éléments de celui-ci),
- une information d'authentification pour authentifier des éléments du jeton
- un cryptage pour crypter le contenu du jeton
- une information du temps d'expiration pour indiquer le moment jusqu'auquel le jeton reste valide.

2. Procédé selon la revendication 1, dans lequel l'étape a est réalisée par le terminal du représentant de groupe concerné diffusant en continu ou périodiquement l'identifiant de groupe (A), et dans lequel l'étape b est réalisée par les éléments prospects (les terminaux de ceux-ci) établissant une communication avec le représentant de groupe en réponse à cette diffusion.

3. Procédé selon la revendication 1, dans lequel l'étape a est réalisée par le terminal du représentant de groupe listant en continu ou périodiquement des requêtes d'entrée, des éléments prospects (les terminaux de ceux-ci) envoyant des requêtes, et le terminal du représentant de groupe répondant avec l'identifiant de groupe (A), et dans lequel l'étape b est réalisée dans une poursuite de la communication établie dans l'étape a.

4. Procédé selon la revendication 1, dans lequel les multiples représentants de groupe de groupes différents peuvent être présents au voisinage de l'élément prospect, et l'élément prospect est validé pour faire une sélection du ou des groupes qu'il a l'intention de joindre.

5. Procédé selon l'une quelconque des revendications précédentes, dans lequel le représentant de groupe reçoit l'option d'accepter ou rejeter des éléments prospects soumis.

6. Procédé selon l'une quelconque des revendications précédentes, dans lequel des étapes d'authentification sont incluses pour valider l'authenticité de l'identifiant de groupe (A) et/ou des identifiants d'élément (M1, M2, M3, etc.).

7. Procédé selon l'une quelconque des revendications précédentes, dans lequel des étapes de cryptage sont incluses pour protéger le contenu de l'échange d'informations entre un représentant de groupe et un ou des éléments prospects.

8. Procédé selon l'une quelconque des revendications précédentes, dans lequel le ou les jetons de groupe sont cryptés pour protéger leurs contenus à l'encontre du fait d'être décrits ou modifiés par inadvertance par un tiers.

9. Produit de programme d'ordinateur comprenant des instructions pour amener un processeur à effectuer les étapes du procédé selon l'une quelconque des revendications 1 à 8 qui précèdent.

10. Terminal mobile comprenant des composants agencés pour effectuer le procédé selon l'une quelconque des revendications 1 à 8 qui précèdent..
